Europäisches Patentamt

European Patent Office

Office européen des brevets

(11) Publication number: **0 622 130 A1**

# EUROPEAN PATENT APPLICATION

(21) Application number: **94106200.2**

(22) Date of filing: **21.04.94**

(51) Int. Cl.5: **B09B 3/00**

(30) Priority: **28.04.93 GB 9308816**

(43) Date of publication of application:
**02.11.94 Bulletin 94/44**

(84) Designated Contracting States:
**BE DE ES FR GB IT NL**

(71) Applicant: **AIR PRODUCTS GMBH**
**Hüttenstrasse 50**
**D-45527 Hattingen (DE)**
Applicant: **HP BIOTECHNOLOGIE GmbH**
**Brauckstrasse 51**
**D-58454 Witten 6 (Annen) (DE)**

(72) Inventor: **Müller, Michael Reinhold**
**8 Ockenden Gardens**
**Woking, Surrey GU22 7LY (GB)**
Inventor: **Distler, Claudia Maria**
**c/o Air Products GmbH,**
**Huttenstrasse 50**
**D-4320 Hattingen (DE)**
Inventor: **Vandermeiren, Michel, c/o Air**
**Products S.A.**
**Chausse de Waver 1789,**
**Waversesteenweg**
**B-1160 Brussels (BE)**
Inventor: **Raphael, Thomas**
**Am Truxhof 20**
**D-44229 Dortmund (DE)**
Inventor: **Sprenger, Bertold**
**Portmannsweg 45**
**D-44388 Dortmund (DE)**
Inventor: **Janzen, Stefan**
**Patronatstrasse 19**
**D-48165 Münster (DE)**

(74) Representative: **Lucas, Brian Ronald**
**Lucas & Co.**
**135 Westhall Road**
**Warlingham Surrey CR6 9HJ (GB)**

(54) **Method and apparatus for decontaminating soil.**

(57) Soil is decontaminated by first being subjected to a biological treatment in a reactor vessel (5) and then ozone treatment in ozone contactor (22). The biological treatment decomposes the less resistant contaminants whilst the ozone treatment oxidizes the more resistant contaminants.

EP 0 622 130 A1

EP 0 622 130 A1

This invention relates to a method and an apparatus for decontaminating soil.

As used herein the term "soil" means the upper layer of earth extending from the ground typically to a depth of 3 to 5 metres.

Soil can become contaminated in a number of ways. These include the dumping of chemical waste which may be intentional or unintentional. Although soil will adsorb many noxious chemical substances these may gradually be leached out by the rain and pass into the aquifers from which drinking water is extracted.

Many of these noxious chemical substances are highly toxic and are known to be carcinogens.

Various attempts have been made to decontaminate soil.

Biological treatment involves increasing the micro-biological activity in the soil to enhance the natural process of decomposition. However, many noxious chemical substances, particularly polycyclic compounds containing four or more rings are highly resistant to biological treatment. In addition, several polycyclic compounds containing three rings are also resistant to biological treatment.

Chemical oxidation is effective but is relatively expensive. Amongst the oxidizing agents which have been used are ozone, hydrogen peroxide and chlorine.

According to the present invention there is provided a method for decontaminating soil, which method comprises the steps of subjecting said soil to biological treatment followed by ozone treatment.

Preferably, said biological treatment comprises forming a slurry by bringing said soil into contact with water, nutrients and air and/or oxygen in a reactor vessel.

Preferably, sufficient air and/or oxygen is added to obtain a concentration of at least 2mg dissolved $O_2$ per litre of slurry.

Preferably, said method includes the step of rotating said reactor vessel.

Advantageously, said soil, water and air and/or oxygen are brought into contact in a reactor having a rotating drum preferably provided with blades and/or paddles.

Preferably, said nutrients comprise sources of phosphate, nitrogen and other elements such as K, Na, Mn, Mg, for example:

(a) an organic fertiliser commercially available under the trademark NITROPHOSCA; or

(b) organic sources of N and P such as organic byproducts from food processing plants

Advantageously, said nutrients will be added to said soil so that ratio (by weight) of C:N:P is about 100:10:1.

If desired, additional microorganisms may be introduced into the soil, for example from freely rotting organic compost.

Preferably, at least $10^3$ microorganisms are added per gram of soil.

More preferably, between $10^5$ and $10^7$ microorganisms are added per gram of soil.

Advantageously, $10^6$ microorganisms are added per gram of soil.

Typically, the reactor will be operated in batch mode, each batch being subjected to biological treatment from 1 to 100 days according to the contamination. The temperature inside the batch reactor will typically be maintained at from 15°C to 30°C. Preferably, the temperature should be at least 10°C but should not exceed 55°C. If desired, the reactor could be operated on a continuous basis.

Preferably, the reactor vessel will be provided with a vent through which gases from the reactor vessel can be vented. Typically, such gases will comprise $O_2$, $N_2$, $H_2O$ and small quantities of volatile organics.

Advantageously, such gases are cleaned to remove the volatile organics by passage through activated carbon or bio-filters.

Preferably, biologically treated soil from the reactor vessel is introduced into a holding vessel.

Advantageously, said biologically treated soil is suspended in an aqueous liquid for said ozone treatment.

Preferably said soil is placed in suspension by introducing said soil into a mixing vessel containing said aqueous liquid and continually rotating stirrers.

Advantageously, said aqueous liquid contains oxidizing agents such as $H_2O_2$ and/or $TiO_2$ and/or surfactants.

Typically, said suspension will contain (by weight) from 10% to 30% soil, and, advantageously, about 20% soil.

Preferably, said suspension is brought into contact with ozone. This can be effected in said mixing vessel or, more preferably in a separate ozone contactor.

Advantageously, said suspension is continually recirculated through said mixing vessel and said ozone contactor until the contaminants in the soil are oxidized to the desired level.

In order to maintain the soil in suspension it may be desirable to pump said suspension through a main circuit and divert a portion of said suspension through said ozone contactor.

Once the level of contaminants has been reduced to a desired level the suspension is preferably transferred to a settling tank where the soil is allowed to settle. The aqueous liquid is returned to the tank and the soil is returned to the land. Alternatively, if analysis shows that the ozone treatment has oxidised the contaminants to bio-degradable compounds, the solids may be further biologically treated in a second reactor vassel or recirculated to the first reactor vessel if desired.

Advantageously, said method also includes the step of removing particles having a particle size greater than 100μm and preferably greater than 50μm prior to biological treatment. In a particularly preferred variant particles greater than 16μm and less than 10μm are removed prior to biological treatment.

The present invention also provides an apparatus for carrying out a method according to the invention, which apparatus comprises means for biologically treating contaminated soil, and means to treat biologically treated soil with ozone.

Preferably, said means for biologically treating contaminated soil comprises a reactor vessel.

Advantageously, said apparatus comprises means to rotate said reactor vessel.

If desired, said means to rotate said reactor vessel may be capable of rotating said reactor vessel first in one direction and then in the other.

Advantageously, said apparatus includes at least one perforated tube extending into said reactor vessel for introducing water and/or nutrients and/or air and/or oxygen and/or additional microorganisms into said reactor vessel. One perforated tube extending substantially axially along substantially the entire length of said reactor vessel may be used for introducing all or any additions into the reactor vessel, either separately or in any combination.

Preferably, said reactor vessel contains paddles.

Advantageously, said apparatus includes means to remove volatile organics from gas exiting said reactor vessel.

Preferably, said apparatus includes a holding vessel for storing biologically treated soil.

Advantageously, said apparatus includes a mixing vessel having a stirrer for maintaining said soil in suspension.

Preferably, said apparatus includes an ozone contactor.

Advantageously, said apparatus includes a pump for pumping said suspension from said mixing vessel to said ozone contactor.

Preferably, said apparatus includes a pipe for returning said suspension from said ozone contactor to said mixing vessel.

Advantageously, said apparatus includes a pipe arranged in parallel with said ozone contactor so that, in use, said pump can circulate said suspension through said pipe and said ozone contactor in parallel.

If desired, said apparatus may include means for injecting ozone into said suspension upstream of said ozone contactor.

Advantageously, said apparatus includes a separator for recovering soil from said suspension.

If desired, said apparatus may also include second means for biologically treating contaminated soil after said ozone treatment.

If desired, said apparatus may also comprise screening equipment for removing particles over 100μm upstream of said biological treatment apparatus.

The present invention also relates to soil when treated by a method in accordance with the present invention or by an apparatus in accordance with the present invention.

For a better understanding of the present invention reference will now be made, by way of example, to the accompanying drawing, which is a flow sheet of an apparatus in accordance with the invention.

Referring to the drawing, there is shown an apparatus for decontaminating soil. The apparatus, which is generally identified by reference numeral 1 comprises a feed hopper 2 which receives contaminated soil, excavated from the top 5m of a site.

The feed hopper 2 is arranged to deliver the soil onto a conveyor belt 3 which is positioned to drop the soil into a feed hopper 4 of a reactor vessel 5.

The reactor vessel 5 is provided with a drum 6 which is provided with a plurality of paddles 7 and which can be rotated about its longitudinal axis by a motor 8.

A pipe 55 and a tube 9 are arranged to deliver water and air respectively to the reactor vessel 5 via a perforated tube (not shown) which extends axially into the reactor vessel 5. The reactor vessel 5 is also provided with a vent 10 having a fan 10a to blow waste gas to a gas cleaning unit comprising carbon filters 10b.

A holding vessel 11 is provided beneath the outlet 12 of the reactor vessel 5 as shown.

A slurry pump 13 is arranged to transfer soil slurry (typically comprising (by weight) 50% water and 50% soil) from the holding vessel 11 to a mixing vessel 14 where it is further diluted with water and kept in

4

motion by a stirrer 15 driven through a gear train (not shown) by a motor 16.

The soil is maintained in suspension in the liquid by the stirrer 15.

Slurry pump 17 is arranged to recirculate the majority of the suspension to the mixing vessel 14 via valve 18 and pipe 19 whilst the remainder of the suspension is forced through valve 20 and pipe 21 to an ozone contactor vessel 22. Valve 26 is closed during this step.

The suspension leaves the ozone contactor vessel 22 via pipe 23 and is pumped by slurry pump 24 through pipe 25 to mixing vessel 14.

After a batch has been oxidized to the required level valve 20 is closed and a valve 26 is opened to allow the suspension in the mixing vessel 14 to pass into a settling tank 27 where the water and solids separate. The water is returned to a water tank 28.

If desired, the partially dewatering solids may be returned to the feed hopper 4 via recycle line 56 and pump 57. Alternatively, the solids may be passed to a second biological reactor vessel or dropped onto a conveyor 29 of a vacuum belt filter for further dewatering and return to the land.

Excess water in the decontaminated soil is collected in a trough 30 below the conveyor 29 and is returned to the water tank 28 via pump 31 and pipe 32.

A pump 33 is provided to feed water from the water tank 28 to both the mixing vessel 14 via pipe 34 and multiple inlet tubes 35, and to the reactor vessel 5 via pipe 55.

A liquid oxygen tank 36 supplies industrially pure liquid oxygen to an evaporator 37. The gaseous oxygen is then split into two streams. One stream carries gaseous oxygen through pipe 38 and valve 39 to an ozonizer 40. Ozone and unconverted oxygen leave the ozonizer 40 through pipe 41 and, after passing through valve 51, are introduced into the suspension entering the ozone contactor 22.

Gas leaves the ozone contactor 22 via pipe 43 and passes through an ozone destructor 44. The oxygen rich gas leaving the ozone destructor 44 passes through pipe 45 and is combined with air from pipe 47 and gaseous oxygen from the liquid oxygen tank 36 delivered via pipe 48 and valve 49.

The oxygen rich gas is sucked by fan 10a through header pipe 50 and tube 9 into the reactor vessel 5.

## Example:

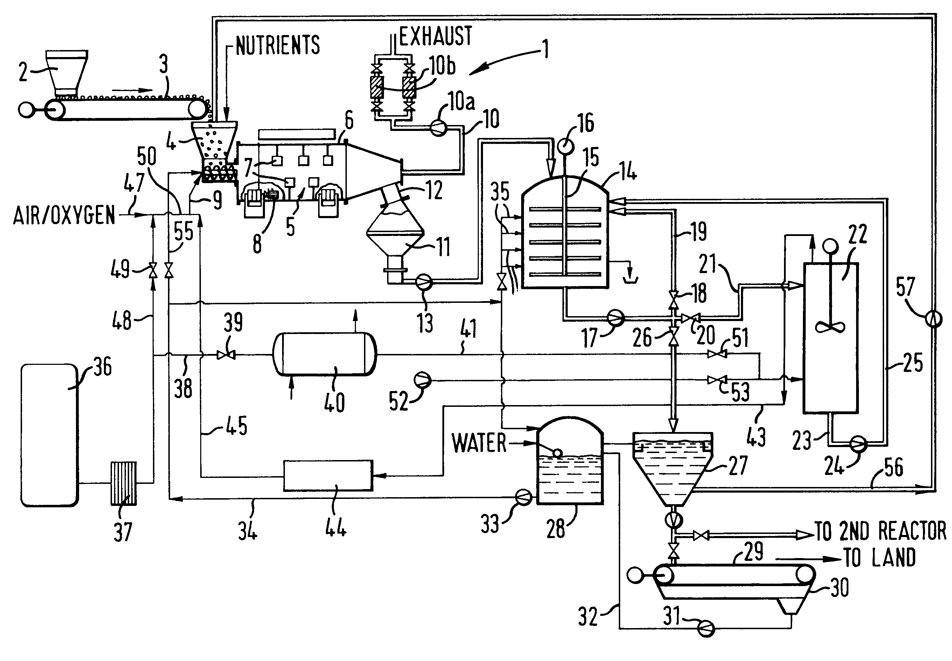

Part of the apparatus shown in Figure 1 was erected on a private site which had previously been occupied by a factory where railway sleepers were impregnated with a variety of unknown preservatives since the turn of the century. The other part was constructed in a laboratory. However, to simplify the description the apparatus is described as if the whole was on the private site.

At the commencement of the biological treatment a valve 12 at the outlet of the reactor vessel 5 was closed. The motor 8 was then activated to rotate the drum 6 at approximately 1.5rpm.

Soil was then extracted from a first part of the site and introduced into the reactor vessel 5 via feed hopper 2, conveyor belt 3 and feed hopper 4.

As the soil passed along conveyor belt 3 nutrients were added in the form of the organic fertiliser NITROPHOSCA to give a ratio of C:N:P of about 100:10:1 (by weight). No additional microorganisms were added.

As the soil entered the reactor vessel 5 an approximately equal weight of water was introduced through pipe 55 to form a soil slurry of 50% (by weight) water.

When the reactor vessel 5 was full (approximately $0.7m^3$ of soil) fan 10a was started and air sucked into the reactor vessel 5 at the rate of about $2m^3/h$.

The soil was left in the reactor vessel 5 for 30 days during which time the drum 6 was continuously rotated to enhance distribution of the nutrients and, more importantly, to help distribute the air amongst the soil. This extended period of treatment was used to give the microorganisms every opportunity to biologically degrade the contaminants.

At the end of the 30 days the valve 12 at the outlet of the reactor vessel 5 opened and the reactor vessel 5 inclined to allow the soil slurry to pass into holding vessel 11. The reactor vessel 5 was then refilled with a new charge of soil, water and nutrients and the process repeated.

In the meantime, mixing vessel 14 was approximately one third filled with water from water tank 28. Motor 16 was then activated to rotate the stirrer 15 at approximately 5rpm. Slurry pump 13 was then activated to transfer the biologically treated soil slurry from the holding vessel 11 to the mixing vessel 14.

The stirrer 15 maintained the soil in suspension (approximately 20% by weight soil, 80% water). While the biologically treated soil was being transferred to the mixing vessel 14 (and after all the biologically treated soil had been transferred to the mixing vessel 14) the suspension flowed from the bottom of the mixing vessel 14 to the inlet of slurry pump 17. At this time in the batch process valves 18 and 20 were open and valve 26 closed.

Part of the suspension (850l/h) was passed through pipe 21 to ozone contactor 22 which was provided with a stirrer driven by a motor.

Oxygen and ozone from ozonizer 40 in a concentration of about 10% $O_3$ by weight was introduced into the ozone contactor 22 through a diffuser (not shown).

The suspension which left the ozone contactor 22 via pipe 23 was partially oxidized and was returned to the mixing vessel 14.

The suspension was recirculated through the ozone contactor 22 until the contaminants had been oxidized to an acceptable level.

When the oxidation was complete valve 51 was closed, compressor 52 started and valve 53 opened to blow purge air through the ozone contactor 22 for a period of about 1 hour during which time the suspended soil was pumped through the ozone contactor 22. The object of this procedure was to remove any residual ozone.

After purging was completed valve 53 was closed and compressor 52 was shut down.

Valve 26 was opened and valve 20 shut to allow the suspension to pass into settling tank 27. The solids settled displacing the water which returned to the water tank 28.

The decontaminated solids in the settling tank 27 were dropped onto conveyor 29 and stockpiled ready for return to the site (no further treatment being necessary in this case).

Table I shows the results of laboratory tests indicating the effect of using different amounts of ozone on biologically pre-treated samples.

Tables IIa and IIb show the results of laboratory tests indicating the effect of using different amounts of ozone on non-biologically pre-treated samples. The anomalous results for Sample 2 probably reflect the variability of the composition of the soil. (The composition of the biologically treated soil was more consistent in view of the extensive mixing.)

A brief comparison of Tables I and II immediately highlights the significance of the present invention. In particular, using biologically pre-treated soil and only 0.361g $O_3$/kg soil the total residual PAH's (polyaromatic hydrocarbons) amounted to just 3.6mg/kg (Table I, Sample 3).

To achieve a similar PAH using ozone alone required about 113mg $O_3$/kg soil (Table II, Sample 7). It will be noted that there is a 320-fold difference in the quantity of ozone consumed.

## Table I (BIOLOGICALLY PRE-TREATED SOIL)

| Rings | O$_3$ (g/kg soil)<br>Contaminant | Nil<br>Sample 1 | 0.185<br>Sample 2 | 0.361<br>Sample 3 | 0.729<br>Sample 4 | 1.189<br>Sample 5 | 2.2311<br>Sample 6 |
|---|---|---|---|---|---|---|---|
| 2 | Naphthalene | 70.5 µg | < 25 µg | n.b | n.b | n.b | n.b |
| 3 | Acenaphthylene | < 70 µg | 88 µg | n.b | n.b | n.b | n.b |
| 3 | Acenaphthene | 0.18 | 85.6 µg | 0.16 | 53.0 µg | n.b | 35.5 µg |
| 3 | Fluorene | 0.15 | 11.7 µg | 0.17 | 67.5 µg | n.b | 53.4 µg |
| 3 | Phenanthrene | 75.8 µg | 10.1 µg | 73.7 µg | 26.9 µg | n.b | 23.3 µg |
| 3 | Anthracene | 32.5 µg | n.b | 15.6 µg | 12.1 µg | n.b | 27.3 µg |
| 4 | Fluoranthene | 0.82 | 0.20 | 0.81 | 0.26 | n.b | 0.18 |
| 4 | Pyrene | 0.38 | 0.13 | 0.22 | n.b | n.b | n.b |
| 4 | Benzo(a)anthracene | 0.13 | 21.8 µg | 0.11 | 44.0 µg | 48.0 µg | 28.6 µg |
| 4 | Chrysene | 0.21 | 61.8 µg | 0.24 | 94.6 µg | 16.3 µg | 17.5 µg |
| 5 | Benzo(b)fluoranthene | 0.78 | 0.24 | 0.68 | 0.26 | 0.32 | 0.19 |
| 5 | Benzo(k)fluoranthene | 0.35 | 96 µg | 0.31 | 0.11 | 0.12 | 77.1 µg |
| 5 | Benzo(a)pyrene | 0.53 | 0.17 | 0.50 | 0.18 | 0.19 | 94.8 µg |
| 5 | Dibenzo(a,h)anthracene | 0.12 | 30.3 µg | 0.11 | 42.5 µg | 48.2 µg | 28.6 µg |
| 5 | Benzo(g,h,i)perylene | 74.5 µg | 26.7 µg | 60.7 µg | 17.6 µg | 22.0 µg | 17.4 µg |
| 6 | Indeno(1,2,3-c,d)pyrene | 0.15 | 48.1 µg | 0.13 | 38.7 µg | 51.2 µg | 34.8 µg |
| Total PAH according to EPA (mg/kg) | | 4.1 | 1.2 | 3.6 | 1.0 | 0.82 | 0.81 |

** n.b = negligible

**Table IIa** (NOT PRE-TREATED)

| Rings | O$_3$ (g/kg soil)<br>Contaminant | Nil<br>Sample 0 | 2.3<br>Sample 1 | 17.8<br>Sample 2 | 39.7<br>Sample 3 | 53<br>Sample 4 | 63<br>Sample 5 |
|---|---|---|---|---|---|---|---|
| 2 | Naphthalene | 27 | 54 | 23 | n.b | n.b | n.b |
| 3 | Acenaphthylene | < 1.0 | < 1.0 | < 1.0 | n.b | < 0.5 | < 0.5 |
| 3 | Acenaphthene | 18.4 | 29 | 9.8 | 5.2 | 4.5 | 5.2 |
| 3 | Fluorene | 21 | 23 | 28 | 16.3 | 9.1 | 10.0 |
| 3 | Phenanthrene | 45 | 42 | 10.9 | 0.9 | 0.48 | 0.19 |
| 3 | Anthracene | 2.6 | 0.78 | < 0.5 | < 0.5 | < 0.3 | < 0.3 |
| 4 | Fluoranthene | 26 | 23 | 14.7 | 2.1 | 0.66 | 0.52 |
| 4 | Pyrene | 11.2 | 10.4 | 1.0 | < 0.5 | < 0.2 | < 0.1 |
| 4 | Benzo(a)anthracene | 3.3 | 2.0 | 0.20 | 0.08 | 0.04 | 0.05 |
| 4 | Chrysene | n.b | 1.1 | 0.37 | 0.09 | 0.11 | < 0.07 |
| 5 | Benzo(b)fluoranthene | 0.99 | 0.77 | 1.2 | 0.38 | 0.18 | 0.14 |
| 5 | Benzo(k)fluoranthene | 0.43 | 0.36 | 0.08 | 0.02 | < 0.02 | < 0.02 |
| 5 | Benzo(a)pyrene | 0.74 | 0.24 | 0.04 | 0.02 | < 0.02 | < 0.02 |
| 5 | Dibenzo(a,h)anthracene | 0.16 | 0.10 | 0.07 | 0.02 | < 0.02 | < 0.02 |
| 5 | Benzo(g,h,i)perylene | < 0.3 | < 0.2 | < 0.1 | < 0.05 | < 0.02 | < 0.01 |
| 6 | Indeno(1,2,3-c,d)pyrene | 0.40 | 0.25 | < 0.1 | < 0.1 | < 0.1 | < 0.05 |
| | | | | | | | |
| Total PAH without EPA | | 157 | 187 | 89 | 25 | 15.1 | 16.2 |
| Total PAH without TVO | | 28.6 | 24.6 | 16.0 | 2.5 | 0.84 | 0.66 |

** n.b = negligible

### Table IIb (NOT PRE-TREATED)

| Rings | Contaminant | O$_3$ (g/kg soil) 81 — Sample 6 | O$_3$ (g/kg soil) 113 — Sample 7 |
|---|---|---|---|
| 2 | Naphthalene | n.b | n.b |
| 3 | Acenaphthylene | < 0.1 | < 0.05 |
| 3 | Acenaphthene | 6.8 | 2.8 |
| 3 | Fluorene | 2.2 | 0.52 |
| 3 | Phenanthrene | 0.12 | 0.05 |
| 3 | Anthracene | < 0.2 | < 0.05 |
| 4 | Fluoranthene | 0.06 | < 0.02 |
| 4 | Pyrene | < 0.1 | < 0.05 |
| 4 | Benzo(a)anthracene | < 0.02 | < 0.01 |
| 4 | Chrysene | < 0.05 | < 0.01 |
| 5 | Benzo(b)fluoranthene | < 0.02 | < 0.01 |
| 5 | Benzo(k)fluoranthene | < 0.02 | < 0.01 |
| 5 | Benzo(a)pyrene | < 0.02 | < 0.01 |
| 5 | Dibenzo(a,h)anthracene | < 0.02 | < 0.01 |
| 5 | Benzo(g,h,i)perylene | < 0.02 | < 0.01 |
| 6 | Indeno(1,2,3-c,d)pyrene | < 0.05 | < 0.01 |
| | Total PAH without EPA | 9.2 | 3.4 |
| | Total PAH without TVO | < 0.1 | < 0.1 |

** n.b = negligible

During our most recent work we have found that many contaminants collect preferentially on the surface of particles having a size range of from 0 to 100$\mu$m, particularly from 0 to 50$\mu$m and, more particularly from 10 to 16$\mu$m. This latest discovery suggests that, in many cases, satisfactory overall decontamination will be achieved by screening the solids to remove particles over 100$\mu$m and preferably below 50$\mu$m, prior to biological treatment. It may be even more preferably to screen the solids to remove particules over 16$\mu$m and below 10$\mu$m so that only a narrow band of particles are treated.

## Claims

1. A method for decontaminating soil, which method is characterized in that it comprises the steps of subjecting said soil to biological treatment followed by ozone treatment.

2. A method according to Claim 1, characterized in that said biological treatment comprises the step of forming a slurry by bringing said soil into contact with water, nutrients and air and/or oxygen in a reactor vessel.

3. A method according to Claim 2, characterized in that it comprises the step of adding sufficient air and/or oxygen to obtain a concentration of at least 2mg $O_2$ per litre of slurry.

4. A method according to Claim 2 or 3, characterized in that said nutrients comprise sources of phosphate and nitrogen.

5. A method according to Claim 4, characterized in that said nutrients are added to soil so that the ratio (by weight) of C:N:P is about 100:10:1.

6. A method according to any preceding Claim, characterized in that it includes the step of introducing additional microorganisms into the solid.

7. A method according to any preceding Claim, characterized in that said biological treatment is carried out at a temperature from 10°C to 55°C.

8. A method according to any preceding Claim, characterized in that it includes the step of removing at least some volatile organics from gas from said reactor vessel.

9. A method according to any preceding Claim, characterized in that said biologically treated soil is suspended in an aqueous liquid.

10. A method according to Claim 9, characterized in that said aqueous liquid contains oxidizing agents.

11. A method according to Claim 10, characterized in that said oxidizing agents are selected from the group consisting of $H_2O_2$, $TiO_2$, surfactants and mixtures thereof.

12. A method according to Claim 9, 10 or 11, characterized in that said suspension contains about 20% (by weight) soil.

13. A method according to any of Claims 8 to 12, characterized in that said suspension is brought into contact with ozone.

14. A method according to Claim 13, characterized in that part of the suspension from said mixing vessel is passed through an ozone contactor and at least part of the balance is recycled to said mixing vessel.

15. A method according to Claim 13 or 14, characterized in that it includes the step of discontinuing the supply of ozone to said ozone contactor and replacing it with air and/or oxygen.

16. A method according to any preceding Claim, characterized in that it includes the step of removing solids having a particle size greater than 50µm, prior to biological treatment.

17. A method according to any preceding Claim, characterized in that it includes the step of removing solids having a particle size greater than 16µm and less than 10µm prior to biological treatment.

18. An apparatus for carrying out a method according to Claim 1, which apparatus comprises a reactor vessel (5) for biologically treating contaminated soil, and means to treat biologically treated solids with ozone.

19. An apparatus as claimed in Claim 18, characterized in that it includes at least one perforated tube extending into said reactor vessel (5) for introducing water and/or nutrients and/or air and/or oxygen and/or additional microorganisms into said reactor vessel (5).

20. An apparatus as claimed in Claim 18 or 19, characterized in that it includes a mixing vessel (14) having a stirrer (15) for maintaining said soil in suspension.

21. An apparatus as claimed in Claim 20, characterized in that it includes an ozone contactor (22).

**22.** An apparatus as claimed in Claim 21, characterized in that it includes a pump (17) for pumping said suspension from said mixing vessel (14) to said ozone contactor (22).

**23.** An apparatus as claimed in Claim 21 or 22, characterized in that it includes a pipe (19) arranged in parallel with an ozone contactor (22) so that, in use, said pump (17) can circulate said suspension through said pipe (19) and said ozone contactor (22) in parallel.

**24.** An apparatus as claimed in any of Claims 33 to 48, characterized in that it includes screening equipment for removing particles over 100$\mu$m upstream of said biological treatment apparatus.

**25.** Soil when treated by a method according to any of Claims 1 to 17, or an apparatus according to any of Claims 18 to 24.

## DOCUMENTS CONSIDERED TO BE RELEVANT

| Category | Citation of document with indication, where appropriate, of relevant passages | Relevant to claim | CLASSIFICATION OF THE APPLICATION (Int.Cl.5) |
|---|---|---|---|
| A | DE-A-40 13 552 (LINDE AG)<br><br>* the whole document * | 1,2,<br>6-11,13,<br>18,25 | B09B3/00 |
| A | EP-A-0 297 417 (NORDDEUTSCHE SEEKABELWERKE AG)<br>* claims 1,10; figure 1 * | 1,13,14,<br>18,21 | |
| A | DE-A-39 21 436 (SORBIOS VERFAHRENSTECHNISCHE GERÄTE UND SYSTEME GMBH)<br><br>* column 2, line 57 - column 3, line 51 *<br>* column 4, line 2 - line 11; figure * | 1,2,8,<br>10,11,<br>13,14,<br>18,21 | |

TECHNICAL FIELDS
SEARCHED        (Int.Cl.5)

B09B

The present search report has been drawn up for all claims

| Place of search | Date of completion of the search | Examiner |
|---|---|---|
| THE HAGUE | 2 August 1994 | Van der Zee, W |